# EUROPÄISCHE PATENTANMELDUNG

(11) **EP 2 669 959 A2**
(43) Veröffentlichungstag der Anmeldung: **04.12.2013**
(21) Anmeldenummer: 13167762.7
(22) Anmeldetag: 15.05.2013
(51) Int. Cl.: H01L 31/042, F24J 2/52

(54) **Tragkonstruktion für Solarpaneele**

(30) Priorität: 31.05.2012 DE 102012209162
(71) Anmelder: HILTI Aktiengesellschaft, 9494 Schaan (LI)
(72) Erfinder: Kemple, Lorcan, 6971 Hard (AT)

(57) **Zusammenfassung**

Die Erfindung betrifft eine Tragkonstruktion für Solarpaneele, mit zumindest einem Tragpfosten, welcher ein Fussteil zum Verankern im Boden, ein oberhalb des Fussteils angeordnetes Kopfteil zur Verbindung mit zumindest einem Solarpaneel, und eine Verbindungseinrichtung aufweist, welche das Kopfteil und das Fussteil verbindet. Erfindungsgemäss ist vorgesehen, dass die Verbindungseinrichtung zumindest einen Klemmbügel zum Anpressen des Kopfteils an das Fussteil aufweist, wobei der Klemmbügel aus zwei mit einem Gewinde versehenen Bolzen und einem Verbindungssteg besteht, welcher die beiden Bolzen miteinander verbindet, und wobei die beiden Bolzen durch Durchgangsöffnungen im Kopfteil und durch Durchgangsöffnungen im Fussteil hindurchtreten.

## Beschreibung

Die Erfindung betrifft eine Tragkonstruktion für Solarpaneele, insbesondere für Photovoltaikpaneele, gemäss dem Oberbegriff des Anspruchs 1. Eine solche Tragkonstruktion ist ausgestattet mit zumindest einem Tragpfosten, welcher ein Fussteil zum Verankern im Boden, ein oberhalb des Fussteils angeordnetes Kopfteil zur Verbindung mit zumindest einem Solarpaneel, und eine Verbindungseinrichtung aufweist, welche das Kopfteil und das Fussteil verbindet.

Aus dem Stand der Technik sind Tragkonstruktionen bekannt, die eine Vielzahl von Solarpaneelen in einer vorbestimmten Orientierung tragen. Grössere Solarpaneel-Installationen, die teilweise als "Solarparks" oder "Solarfarmen" bezeichnet werden, können sich über einen variierenden Untergrund erstrecken, so dass die Tragkonstruktionen Einrichtungen aufweisen müssen, welche geometrische Abweichungen des Untergrundes aufnehmen und kompensieren können.

Die DE 203 19 065 U1 offenbart eine Tragkonstruktion mit verkippbaren und höhenverstellbaren Verbindungselementen. Aus der DE 10 2010 022 914 A1 geht eine Tragkonstruktion mit einem mehrteiligen Pfosten zur Höheneinstellung hervor.

Aufgabe der Erfindung ist es, eine Tragkonstruktion für Solarpaneele mit zumindest einem mehrteiligen Pfosten anzugeben, welche besonders einfach in der Montage und günstig in der Fertigung und zugleich besonders zuverlässig und vielseitig einsetzbar ist.

Die Aufgabe wird erfindungsgemäss durch eine Tragkonstruktion mit den Merkmalen des Anspruchs 1 gelöst. Bevorzugte Ausführungsformen sind in den abhängigen Ansprüchen angegeben.

Eine erfindungsgemässe Tragkonstruktion ist dadurch gekennzeichnet, dass die Verbindungseinrichtung zumindest einen Klemmbügel zum, vorzugsweise längsseitigen, Anpressen des Kopfteils an das Fussteil aufweist, wobei der Klemmbügel aus zwei mit einem Gewinde versehenen Bolzen und einem Verbindungssteg besteht, welcher die beiden Bolzen miteinander verbindet, und wobei die beiden Bolzen durch Durchgangsöffnungen im Kopfteil und durch Durchgangsöffnungen im Fussteil hindurchtreten.

Ein Grundgedanke der Erfindung kann darin gesehen werden, das Kopfteil und das Fussteil über zumindest einen Klemmbügel bestehend aus den beiden Bolzen und dem Verbindungssteg miteinander zu verspannen und damit reibschlüssig oder/und auch formschlüssig aneinander festzulegen. Der Klemmbügel umgreift dabei nicht den kompletten Tragpfosten. Vielmehr ist der Klemmbügel durch Durchgangsöffnungen in den beiden Teilen des Tragpfostens hindurchgeführt, d.h. der Klemmbügel umgreift nur einen Bruchteil des jeweiligen Kopf- oder Fussteils. Damit kann der Klemmbügel auch bei relativ grossen Pfostenquerschnitten, wie sie z. B. der Steifigkeit geschuldet sind, vergleichsweise klein und somit günstig ausgeführt werden. Andererseits lassen die vergleichsweise kleinen Abmessungen der Elemente der Verbindungseinrichtung auch relativ grosse Stellwege der beiden Pfostenteile zueinander zu, ohne dass die Pfostenteile hierdurch wesentlich geschwächt würden. Da der Klemmbügel nur einen Bruchteil der jeweiligen Pfostenteile umgibt, kann überdies in besonders einfacher Weise verhindert werden, dass der Klemmbügel den Pfostenquerschnitt signifikant einschnürt.

Für eine Verstellbarkeit ist es bevorzugt, dass die Durchgangsöffnungen für die Bolzen im Kopfteil oder/und die Durchgangsöffnungen für die Bolzen im Fussteil Langlöcher sind. Insbesondere kann vorgesehen sein, dass die Durchgangsöffnungen für die Bolzen im Kopfteil vertikal verlaufende Langlöcher sind. Dies ermöglicht in besonders einfacher Weise eine Höhenverstellung des Kopfteils gegenüber dem Fussteil. Alternativ oder zusätzlich ist es zum Verkippen der Anordnung zweckmässig, dass die Durchgangsöffnungen im Fussteil horizontal verlaufende Langlöcher sind. Wenn die horizontal verlaufenden Langlöcher im Fussteil angeordnet sind, kann sichergestellt werden, dass bei der Höhenverstellung die Höhenposition der Bolzen relativ zum Fussteil und somit relativ zum Erdboden konstant bleibt, was die Montage weiter vereinfachen kann. Unter einem Langloch kann in fachüblicher Weise eine längliche Bohrung verstanden werden. Die Längsseiten des Langlochs sind bevorzugt gerade und/oder verlaufen parallel zueinander und bei einem vertikal verlaufenden Langloch in vertikaler Richtung. Die schmalen Seiten des Langlochs können, aber müssen nicht durch Halbkreise abgeschlossen sein, deren Durchmesser der Breite des Langlochs entsprechen. Die Durchgangsöffnungen im Fussteil können auch Rundlöcher sein, insbesondere wenn ein Verkippen um die y-Achse nicht erforderlich ist.

Bei den mit einem Gewinde versehenen Bolzen kann es sich insbesondere um Schrauben mit jeweils einem Schraubenkopf handeln. Demgemäss ist es besonders bevorzugt, dass die mit einem Gewinde versehenen Bolzen jeweils einen Schraubenkopf aufweisen, der zweckmässigerweise fest mit dem jeweiligen Bolzen verbunden ist. Die Schraubenköpfe sind bevorzugt aussenseitig am Tragpfosten, insbesondere aussenseitig am Fussteil, angeordnet und/oder wirken, vorzugsweise von aussen, gegen das Fussteil. Hierdurch kann die Montage weiter erleichtert werden. Der Verbindungssteg wirkt geeigneterweise gegen das Kopfteil, und zwar vorzugsweise von innen, und/oder liegt am Kopfteil an. Insbesondere kann vorgesehen sein, dass der Verbindungssteg von den Bolzen an das Kopfteil angezogen wird und/oder dass der Verbindungssteg das Kopfteil an das Fussteil andrückt. Der Verbindungssteg kann sich zweckmässigerweise im Inneren des Kopfteils befinden.

Eine weitere vorteilhafte Ausgestaltung liegt darin, dass die Bolzen in den Verbindungssteg eingeschraubt sind. Demgemäss ist es besonders vorteilhaft, dass der Verbindungssteg zwei Innengewinde aufweist, in denen die Gewinde der Bolzen aufgenommen sind, und die mit den Gewinden der Bolzen korrespondieren. In diesem Fall bewirkt eine Drehung der Bolzen im Verbindungssteg eine axiale Verschiebung des Verbindungssteges relativ zu den Bolzen. Diese axiale Verschiebung kann die beiden Teile des Tragpfostens aneinander anpressen.

Insbesondere kann vorgesehen sein, dass die Bolzen in den Durchgangsöffnungen im Kopfteil und/oder in den Durchgangsöffnungen im Fussteil frei drehbar gelagert sind. Hierfür weisen die Durchgangsöffnungen geeigneterweise einen Innenquerschnitt auf, der grösser ist als der Aussenquerschnitt des jeweiligen Bolzens.

Eine Weiterbildung der Erfindung liegt darin, dass die Verbindungseinrichtung zwei Klemmbügel zum Anpressen des Kopfteils an das Fussteil aufweist, die bevorzugt übereinander angeordnet sind. Hierdurch kann eine besonders zuverlässige Verbindung realisiert werden, bei der insbesondere ein unerwünschtes Verkippen um die Y-Achse besonders wirksam verhindert ist. Der zweite Klemmbügel und/oder seine Durchgangsöffnungen im Kopfteil und/oder Fussteil sind zweckmässigerweise in Analogie zum ersten Klemmbügel ausgeführt. Es kann vorgesehen sein, dass die beiden Klemmbügel mittels eines Sicherungssteges miteinander verbunden sind, was die Fertigung und/oder die Montage vereinfachen kann. Die beiden Klemmbügel und der Sicherungssteg können dann zusammen eine Klemmplatte bilden.

Es ist ferner bevorzugt, dass am Kopfteil des Tragpfostens zumindest ein Haken zum Einhängen des Kopfteils am Fussteil vorgesehen ist. Insbesondere kann der Haken so angeordnet sein, dass er ein Einhängen des Kopfteils am Fussteil in einer solchen Position erlaubt, in der die Durchgangsöffnungen im Kopfteil mit den Durchgangsöffnungen im Fussteil fluchten. Besagte Ausgestaltung erlaubt es, das Kopfteil provisorisch am Fussteil zu befestigen, bevor die Klemmbügel angebracht und/oder festgezogen werden. Der Haken ist zweckmässigerweise nach unten und/oder zum Fussteil hin offen und liegt auf dem Fussteil auf. In einer konstruktiv besonders einfachen Ausgestaltung kann der Haken für eine Auflage auf dem oberen Rand des Fussteils vorgesehen sein. Für eine besonders einfache Herstellung kann der Haken einstückig mit dem Kopfteil ausgebildet sein, z.B. ausgestanzt sein.

Weiterhin ist es bevorzugt, dass das Fussteil und das Kopfteil im Querschnitt jeweils einen U-Profilabschnitt mit zwei, bevorzugt parallelen, Seitenschenkeln und einem Mittelschenkel aufweisen, wobei die Mittelschenkel jeweils zwei Seitenschenkel verbinden. Hierdurch kann bei besonders geringem Materialaufwand eine besonders hohe Steifigkeit realisiert werden. Das Kopfteil und/oder das Fussteil können beispielsweise ein Hutprofil aufweisen, wobei der jeweilige U-Profilabschnitt Bestandteil des jeweiligen Hutprofils ist.

Insbesondere kann vorgesehen sein, dass der Mittelschenkel des Kopfteils am Mittelschenkel des Fussteils zumindest mittelbar, bevorzugt unmittelbar, anliegt. Dies kann die Steifigkeit noch weiter verbessern. Vorzugsweise ist der U-Profilabschnitt des Kopfteils in den U-Profilabschnitt des Fussteils eingelegt. Dies kann insbesondere beinhalten, dass der Mittelschenkel des Kopfteils schmäler ist als der Mittelschenkel des Fussteils. Die Seitenschenkel des Kopfteils sind vorzugsweise in Y-Richtung, also in Richtung senkrecht zu den Mittelschenkeln und/oder in Richtung parallel zu den Bolzen, länger als die Seitenschenkel des Fussteils und/oder stehen in Y-Richtung aus dem Fussteil hervor.

Weiterhin ist es zweckmässig, dass die Durchgangsöffnungen für die Bolzen des zumindest einen Klemmbügels in den Mittelschenkeln angeordnet sind. Hierdurch kann einer unerwünschten Deformation der Pfostenteile beim Anziehen der Verbindungseinrichtung entgegengewirkt werden.

Eine weitere bevorzugte Ausgestaltung liegt darin, dass am Tragpfosten eine Tragstrebe und eine Stützstrebe angeordnet sind, wobei die Tragstrebe einerseits mit dem Kopfteil und andererseits mit der Stützstrebe verbunden, insbesondere angelenkt ist, und wobei die Stützstrebe einerseits mit der Tragstrebe und andererseits mit dem Kopfteil verbunden, insbesondere angelenkt ist. Die Tragstrebe, die unterhalb der Tragstrebe verlaufende Stützstrebe und das Kopfteil des Pfostens bilden somit ein Stützdreieck, auf dem die Solarpaneele angeordnet werden können.

Besonders vorteilhaft ist es, dass der Verbindungssteg mittels zumindest einer Sicherungseinrichtung, beispielsweise an den Durchgangsöffnungen für die Bolzen oder auch an zumindest einer anderen Durchgangsöffnung im Kopfteil, formschlüssig am Kopfteil festgelegt ist. Hierdurch kann der Verbindungssteg in einer Vormontageposition, in der die Bolzen noch fehlen, am Kopfteil vorfixiert werden. Die Sicherungseinrichtung kann beispielsweise eine am Verbindungssteg oder am Sicherungssteg angeordnete Klaue oder Schraube sein, welche eine Öffnung im Kopfteil hintergreift.

Die Erfindung wird nachfolgend anhand bevorzugter Ausführungsbeispiele näher erläutert, die schematisch in den beiliegenden Figuren dargestellt sind. In den Figuren zeigen schematisch:
- Figur 1:: eine perspektivische Darstellung einer ersten Ausführungsform einer erfindungsgemässen Tragkonstruktion;
- Figur 2:: den Tragpfosten der Tragkonstruktion aus Figur 1 im Bereich der Verbindungseinrichtung in Seitenansicht;
- Figur 3:: den Tragpfosten der Tragkonstruktion aus Figur 1 im Bereich der Verbindungseinrichtung von vorne;
- Figur 4:: den Tragpfosten der Tragkonstruktion aus Figur 1 im Bereich der Verbindungseinrichtung von hinten;
- Figur 5:: den Tragpfosten der Tragkonstruktion aus Figur 1 im Bereich der Verbindungseinrichtung im Querschnitt;
- Figur 6:: Ansichten wie Figur 3 zur Erläuterung der Höhenverstellbarkeit;
- Figur 7:: Ansichten wie Figur 3 zur Erläuterung der Seitenverstellbarkeit;
- Figur 8:: eine perspektivische Darstellung einer zweiten Ausführungsform einer erfindungsgemässen Tragkonstruktion im Bereich der Verbindungseinrichtung;
- Figur 9:: den Tragpfosten der Tragkonstruktion aus Figur 8 im Bereich der Verbindungseinrichtung von vorne;
- Figur 10:: den Tragpfosten der Tragkonstruktion aus Figur 8 im Bereich der Verbindungseinrichtung von vorne in einem Vormontagezustand, in dem die Bolzen der Klemmbügel noch nicht angebracht sind; und
- Figur 11:: den Tragpfosten der Tragkonstruktion aus Figur 8 im Bereich der Verbindungseinrichtung von vorne mit allen Bolzen.

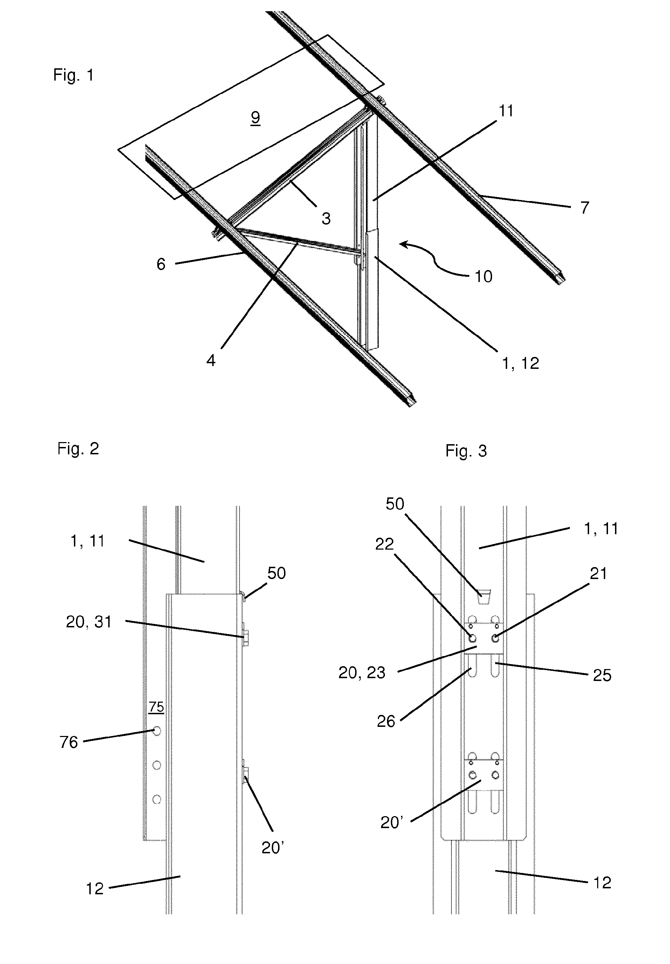

Die Figuren 1 bis 7 zeigen ein erstes Ausführungsbeispiel einer erfindungsgemässen Tragkonstruktion. Wie insbesondere Figur 1 zeigt, weist die Tragkonstruktion einen etwa vertikal verlaufenden Tragpfosten 1 auf. Dieser Tragpfosten 1 besteht aus einem im Erdboden befestigten, beispielsweise eingerammten und/oder einbetonierten, pfahlförmigen Fussteil 12 und einem an der Oberseite des Fussteils 12 angeordneten pfahlförmigen Kopfteil 11, wobei die beiden Pfostenteile 11 und 12 über eine weiter unten im Detail beschriebene Verbindungseinrichtung 10 miteinander verbunden sind.

Die Tragkonstruktion weist ein Stützdreieck auf, wobei ein erster Dreiecksschenkel von einer Tragstrebe 3, ein darunter liegender zweiter Dreiecksschenkel von einer Stützstrebe 4 und ein dritter Dreiecksschenkel vom Kopfteil 11 des Tragpfostens 1 gebildet wird. Die Tragstrebe 3 ist im oberen Bereich des Kopfteils 11 am Kopfteil 11 befestigt, insbesondere angelenkt. Die Stützstrebe 4 ist etwas weiter unterhalb, nämlich insbesondere im Bereich der Verbindungseinrichtung 10, am Kopfteil 11 befestigt, insbesondere angelenkt. Auf ihren dem Tragpfosten 1 abgewandten Seiten sind die Tragstrebe 3 und die Stützstrebe 4 miteinander verbunden, insbesondere angelenkt.

Die Tragkonstruktion weist weiterhin zumindest einen, vorzugsweise zwei parallel verlaufende Längsträger 6 und 7 auf. Diese Längsträger 6 und 7 sind auf der Tragstrebe 3 befestigt und tragen ihrerseits wieder die lediglich schematisch dargestellten Solarpaneele 9, wobei die Solarpaneele 9 beispielsweise mit Modulklemmen an den Längsträgern 6 und 7 befestigt sein können.

In der Regel wird eine Tragkonstruktion mehrere Tragpfosten aufweisen, die analog dem dargestellten Tragpfosten 1 ausgeführt sind. Die Längsträger 6 und 7 erstrecken sich dann über mehrere Tragpfosten 1 hinweg, und sind an mehreren Tragpfosten 1 befestigt, und zwar insbesondere an der Tragstrebe 3 des jeweiligen Tragpfostens 1. Da es mitunter schwierig ist, die Fussteile 12 der Tragpfosten 1 bei variierenden Bodengegebenheiten exakt im Erdboden auszurichten, erlaubt es die erfindungsgemässe Verbindungseinrichtung 10, das Kopfteil 11 relativ zum Fussteil 12 zu verstellen, insbesondere die Höhen- und Winkellage des Kopfteils 11 relativ zum Fussteil 12 zu verändern, wie weiter unten im Detail erläutert ist. Hierdurch können Fehlstellungen der Fussteile 12 kompensiert werden.

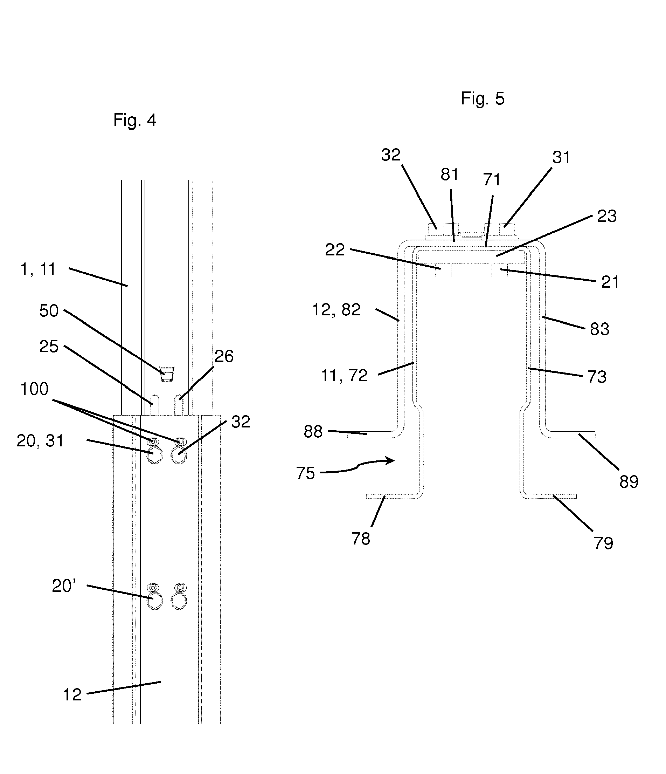

Wie insbesondere Figur 5 zeigt, weist das Fussteil 12 im Querschnitt einen U-Profilabschnitt mit zwei parallelen Seitenschenkeln 82 und 83 und einem Mittelschenkel 81 auf. Auch das Kopfteil 11 weist im Querschnitt einen U-Profilabschnitt mit zwei parallelen Seitenschenkeln 72 und 73 und einem Mittelschenkel 71 auf. Der U-Profilabschnitt des Kopfteils 11 ist im U-Profilabschnitt des Fussteils 12 derart aufgenommen, dass die U-Profile von Kopfteil 11 und Fussteil 12 dieselbe Orientierung aufweisen. Dabei verlaufen die beiden Mittelschenkel 71 und 81 parallel zueinander und liegen zumindest mittelbar, vorzugsweise unmittelbar, aneinander an. Die Seitenschenkel 82 und 83 des Fussteils 12 und die Seitenschenkel 72 und 73 des Kopfteils 11 stehen in derselben Raumrichtung von den Mittelschenkeln 81 bzw. 71 weg.

Wie Figur 5 weiter zeigt, weist das Kopfteil 11 im Querschnitt noch zwei aussenliegende Endflansche 78 und 79 auf, die parallel zum Mittelschenkel 71 verlaufen, und die auf der dem Mittelschenkel 71 abgewandten Seite an jeweils einem der Seitenschenkel 72 bzw. 73 angeordnet sind. Somit weist das Kopfteil 11 im Querschnitt ein Hutprofil auf, gebildet durch den oben beschriebenen U-Profilabschnitt und die beiden Endflansche 78 und 79. Gleichfalls weist das Fussteil 12 im Querschnitt zwei aussenliegende Endflansche 88 und 89 auf, die parallel zum Mittelschenkel 81 verlaufen, und die auf der dem Mittelschenkel 81 abgewandten Seite an jeweils einem der Seitenschenkel 82 bzw. 83 angeordnet sind. Somit weist auch das Fussteil 12 im Querschnitt ein Hutprofil auf, gebildet durch den oben beschriebenen U-Profilabschnitt und die beiden Endflansche 88 und 89.

Auf ihrer dem Mittelschenkel 71 abgewandten Seite weisen die Seitenschenkel 72 und 73 des Kopfteils 11 eine Einschnürung 75 auf, wo ihr Abstand lokal reduziert ist (vgl. Figur 5). Diese Einschnürung 75 dient zum möglichst spielfreien Festlegen der Stützstrebe 4. Wie insbesondere Figur 2 zeigt, weist das Kopfteil 11 in dieser Einschnürung 75 Befestigungslöcher 76 für die Stützstrebe 4 auf.

Die Details der in Figur 1 nur grob angedeuteten Verbindungseinrichtung 10 zur Verbindung von Kopfteil 11 und Fussteil 12 sind in den Figuren 2 bis 5 erkennbar. Wie diese Figuren zeigen, weist die Verbindungseinrichtung 10 zwei Klemmbügel 20 und 20' auf, wobei der Übersichtlichkeit halber nachfolgend nur der erste Klemmbügel 20 im Detail beschrieben ist. Der zweite Klemmbügel 20', der vertikal unterhalb des ersten Klemmbügels 20 angeordnet ist, ist wie der erste Klemmbügel 20 ausgeführt und angeordnet.

Der Klemmbügel 20 besteht aus zwei parallel verlaufenden Bolzen 21 und 22, welche durch das Fussteil 12 und durch das Kopfteil 11, nämlich durch den jeweiligen Mittelschenkel 81 und 71, hindurchgeführt sind, und einem Verbindungssteg 23, der die beiden Bolzen 21 und 22 verbindet. Die Bolzen 21 und 22 sind als Schrauben mit Schraubenköpfen 31 bzw. 32 ausgeführt, und sind in den Verbindungssteg 23 eingeschraubt. Die Schraubenköpfe 31 und 32 liegen aussenseitig am Mittelschenkel 81 des Fussteils 12 an, und der Verbindungssteg 23 innenseitig am Mittelschenkel 71 des Kopfteils 11. Beim Anziehen der Schrauben 21 und 22 werden das Kopfteil 11 und das Fussteil 12 zwischen den Schraubenköpfen 31 und 32 einerseits und dem Verbindungssteg 23 andererseits verklemmt und somit aneinander gesichert.

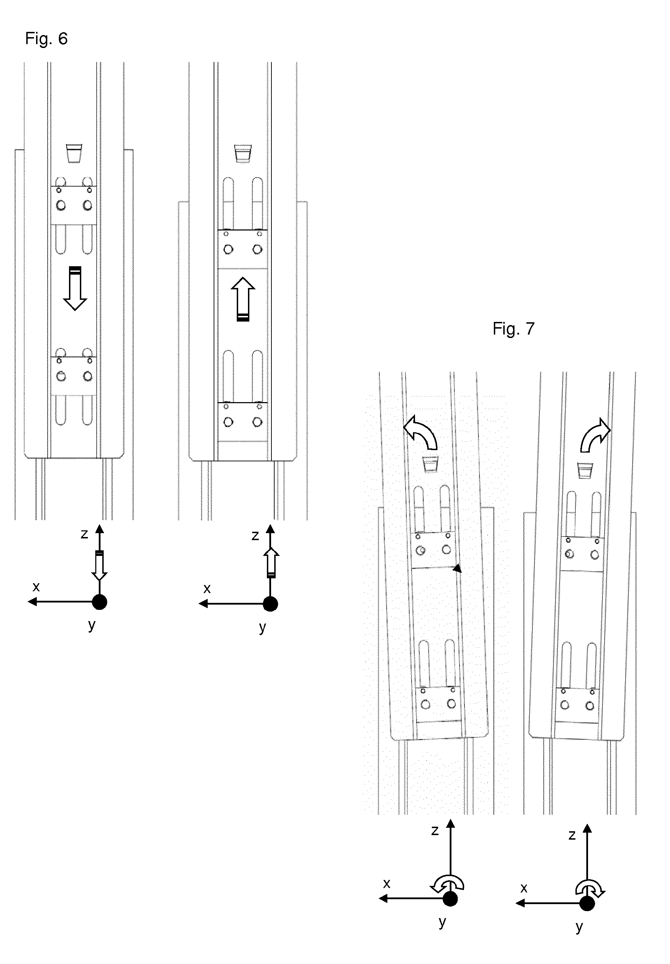

Wie insbesondere Figur 3 zeigt, sind die im Kopfteil 11 angeordneten Durchgangsöffnungen 25 und 26 für die Bolzen 21 und 22 als vertikal verlaufende Langlöcher ausgebildet. Dies ermöglicht es, das Kopfteil 11 an unterschiedlichen Höhenpositionen relativ zum Fussteil 12 festzulegen, wie in Figur 6 angedeutet ist.

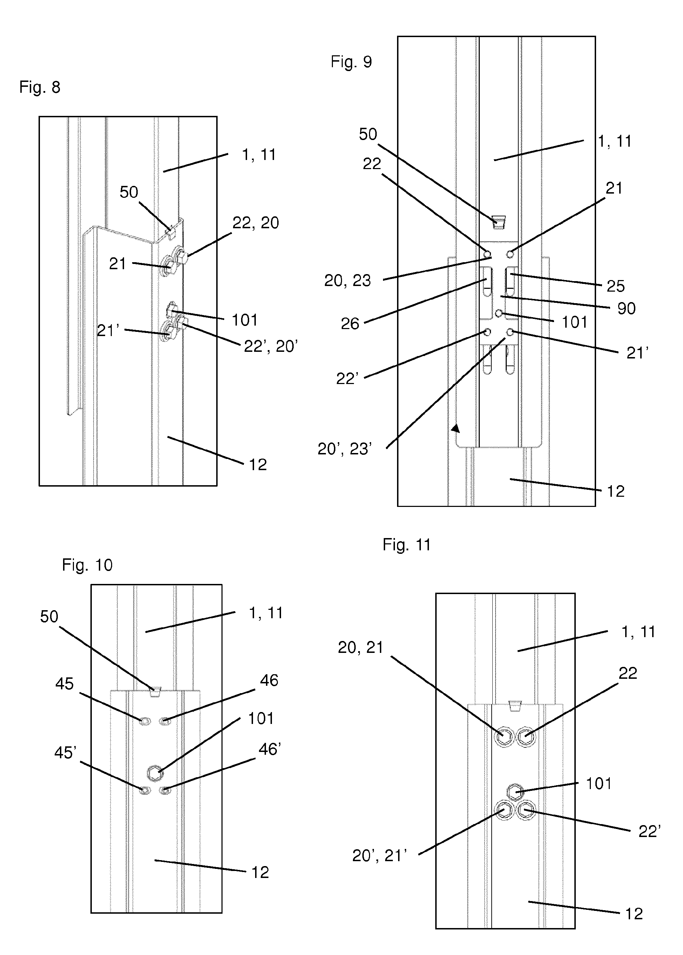

Wie in Figur 7 angedeutet ist, kann das Kopfteil 11 auch in unterschiedlichen Winkelpositionen um die Y-Achse, also um die Achse, die horizontal und parallel zur Längsachse der Bolzen 21 und 22 oder senkrecht zum Mittelschenkel 81 verläuft, relativ zum Fussteil 12 festgelegt werden. Dies wird zum einen dadurch erreicht, dass die Durchgangsöffnungen 45, 46 für die Bolzen 21 und 22 im Fussteil 12 als horizontal verlaufende Langlöcher ausgestaltet sind, und zum anderen dadurch ermöglicht, dass zwischen den benachbarten Seitenschenkeln 72 und 82 und zwischen den benachbarten Seitenschenkeln 73 und 83 jeweils ein Spiel besteht. Die horizontal verlaufenden Durchgangsöffnungen 45, 46 im Fussteil 12 sind in den Figuren 1 bis 7 nicht erkennbar. Sie sind jedoch in Figur 10 im Zusammenhang mit dem zweiten Ausführungsbeispiel gezeigt. Entsprechend gestaltete Durchgangsöffnungen sind auch beim vorliegenden Ausführungsbeispiel vorhanden.

Da das gesamte Stützdreieck am Kopfteil 11 angeordnet ist und das Stützdreieck das Fussteil 12 nicht einschliesst, kann das gesamte Stützdreieck erfindungsgemäss an einem einzigen Ort, nämlich an der Verbindungseinrichtung 10, in Z-Richtung und um die Y-Achse verstellt werden. Hierdurch ist ein besonders geringer Montage- und Materialaufwand gegeben.

Wie insbesondere die Figuren 2 bis 4 zeigen, ist am Kopfteil 11 ein Haken 50 vorgesehen, der zum Fussteil 12 hin offen ist, und mit dem sich das Kopfteil 11 an der oberen Stirnseite des parallel zum Kopfteil 11 verlaufenden Fussteils 12 abstützen kann. Mittels dieses Hakens 50 kann der Monteur das Kopfteil 11 in das Fussteil 12 einhängen und das Kopfteil 11 sodann in einer Position loslassen, in der sich der am Kopfteil 11 angeordnete Verbindungssteg 23 im Bereich der Durchgangsöffnungen des Fussteils 12 befindet. Der Monteur kann dann einfach die Schrauben 21 und 22 durch das Fussteil 12 und das Kopfteil 11 hindurch in den Verbindungssteg 23 einschrauben. Der Monteur kann daraufhin das Stützdreieck zu den Stützdreiecken der benachbarten Tragpfosten ausrichten und das Stützdreieck dann durch Anziehen der Schrauben 21 und 22 mit einem vorgegebenen Drehmoment festlegen.

Um die Montage weiter zu vereinfachen, kann der Verbindungssteg 23 im Anlieferzustand an den Durchgangsöffnungen 25 und/oder 26 des Kopfteils 11 formschlüssig vorfixiert sein. Hierfür sind am Verbindungssteg 23 zwei beispielsweise als Schrauben ausgeführte Sicherungseinrichtungen 100 angeordnet (vgl. insbesondere Fig. 4), welche die Durchgangsöffnungen 25 und 26 des Kopfteils 11 auf der dem Verbindungssteg 23 abgewandten Seite des Kopfteils 11 hintergreifen. Im Fussteil 12 sind korrespondierende Ausnehmungen für die Sicherungseinrichtungen 100 angeordnet.

Die Figuren 8 bis 11 zeigen ein zweites Ausführungsbeispiel einer erfindungsgemässen Tragkonstruktion. Das zweite Ausführungsbeispiel gleicht dem ersten Ausführungsbeispiel in weiten Teilen, so dass nachfolgend nur auf die Unterschiede zum ersten Ausführungsbeispiel eingegangen wird. Für die anderen Merkmale kann auf das erste Ausführungsbeispiel verwiesen werden.

Das zweite Ausführungsbeispiel zeichnet sich insbesondere dadurch aus, dass die beiden Verbindungsstege 23 und 23' und somit die beiden Klemmbügel 20 und 20' über einen Haltesteg 90 miteinander verbunden sind (vgl. Figur 9). Der Haltesteg 90 erstreckt sich im Inneren des Kopfteils 11 vertikal von einem Verbindungssteg 23 zum anderen Verbindungssteg 23'. Die Verbindungsstege 23 und 23' und der Haltesteg 90 bilden zusammen eine Schraubplatte. Die Verbindungsstege 23 und 23' sind breiter als der Haltesteg 90, so dass die Schraubplatte eine Doppel-T-Form aufweist.

Auch beim zweiten Ausführungsbeispiel ist eine Sicherungseinrichtung 101 zum zumindest vorläufigen Sichern des Verbindungsstegs 23 am Kopfteil 11 vorgesehen. Die Sicherungseinrichtung 101 wird beim zweiten Ausführungsbeispiel durch eine Schraube gebildet, die in den Sicherungssteg 90 eingeschraubt ist. Da der Sicherungssteg 90 beide Verbindungsstege 23 und 23' verbindet, sichert die Sicherungseinrichtung 101 zugleich beide Verbindungsstege 23 und 23'. Die Sicherungseinrichtung 101 ist durch das Kopfteil 11 hindurchgeführt, wobei der Schraubenkopf der Sicherungseinrichtung 101 und der Sicherungssteg 90 jeweils auf einander abgewandten Seiten des Kopfteils 11 angeordnet sind. Im Fussteil 12 ist eine Durchgangsöffnung vorgesehen, durch welche der Schraubenkopf der Sicherungseinrichtung 101 hindurchtreten kann.

Bei der Produktion können die Verbindungsstege 23 und 23' mittels der Sicherungseinrichtung 101 an das Kopfteil 11 angeschraubt werden. Die Sicherungseinrichtung 101 hält die Schraubplatte bestehend aus den Verbindungsstegen 23 und 23' und dem Sicherungsschenkel 90 in der korrekten Position, so dass der Monteur die Bolzen 21, 22, 21', 22' ohne grossen Positionierungsaufwand durch die Durchgangsöffnungen 45, 46, 25, 26 hindurch in die Verbindungsstege 23 und 23' einschrauben kann, nachdem das Kopfteil 11 mittels des Hakens 50 in das Fussteil 12 eingehängt worden ist.

Nachdem zumindest einer der Bolzen 21, 22, 21', 22' in einen der Verbindungsstege 23 oder 23' eingeschraubt ist, kann der Monteur die Sicherungseinrichtung 101 lösen und entnehmen. Hierfür ist die entsprechende Durchgangsöffnung im Fussteil 12 vorgesehen. Daraufhin kann die Höhe (z-Position) wie im Zusammenhang mit dem ersten Ausführungsbeispiel beschrieben eingestellt werden. Vorzugsweise kann die Sicherungseinrichtung 101 auch direkt in die Verbindungsstege 23 und/oder 23' eingeschraubt werden und/oder hat dieselbe Spezifikation wie zumindest einer der Bolzen 21, 22, 21', 22', so dass einer der Bolzen 21, 22, 21', 22' durch die entnommene Sicherungseinrichtung 101 gebildet werden kann.

## Patentansprüche

1. Tragkonstruktion für Solarpaneele (9),
mit zumindest einem Tragpfosten (1), welcher ein Fussteil (12) zum Verankern im Boden, ein oberhalb des Fussteils (12) angeordnetes Kopfteil (11) zur Verbindung mit zumindest einem Solarpaneel, und eine Verbindungseinrichtung (10) aufweist, welche das Kopfteil (11) und das Fussteil (12) verbindet,
**dadurch gekennzeichnet,**
**dass** die Verbindungseinrichtung (10) zumindest einen Klemmbügel (20) zum Anpressen des Kopfteils (11) an das Fussteil (12) aufweist,
wobei der Klemmbügel (20) aus zwei mit einem Gewinde versehenen Bolzen (21, 22) und einem Verbindungssteg (23) besteht, welcher die beiden Bolzen (21, 22) miteinander verbindet, und
wobei die beiden Bolzen (21, 22) durch Durchgangsöffnungen (25, 26) im Kopfteil (11) und durch Durchgangsöffnungen im Fussteil (12) hindurchtreten.

2. Tragkonstruktion nach Anspruch 1,
**dadurch gekennzeichnet,**
**dass** die Durchgangsöffnungen (25, 26) im Kopfteil (11) vertikal verlaufende Langlöcher sind, und
**dass** die Durchgangsöffnungen (45, 46) im Fussteil (12) horizontal verlaufende Langlöcher sind.

3. Tragkonstruktion nach einem der vorstehenden Ansprüche,
**dadurch gekennzeichnet,**
**dass** die mit einem Gewinde versehenen Bolzen (21, 22) jeweils einen Schraubenkopf (31, 32) aufweisen, der aussenseitig am Fussteil (12) angeordnet ist.

4. Tragkonstruktion nach einem der vorstehenden Ansprüche,
**dadurch gekennzeichnet,**
**dass** die Bolzen (21, 22) in den Verbindungssteg (23) eingeschraubt sind.

5. Tragkonstruktion nach einem der vorstehenden Ansprüche,
**dadurch gekennzeichnet,**
**dass** die Verbindungseinrichtung (10) zwei Klemmbügel (20 und 20') zum Anpressen des Kopfteils (11) an das Fussteil (12) aufweist, die übereinander angeordnet sind, wobei die beiden Klemmbügel (20 und 20') insbesondere mittels eines Haltesteges (90) miteinander verbunden sind.

6. Tragkonstruktion nach einem der vorstehenden Ansprüche,
**dadurch gekennzeichnet,**
**dass** am Kopfteil (11) des Tragpfostens (1) zumindest ein Haken (50) zum Einhängen des Kopfteils (11) am Fussteil (12) vorgesehen ist.

7. Tragkonstruktion nach einem der vorstehenden Ansprüche,
**dadurch gekennzeichnet,**
**dass** das Fussteil (12) und das Kopfteil (11) im Querschnitt jeweils einen U-Profilabschnitt mit zwei Seitenschenkeln (82, 83 bzw. 72, 73) und einem Mittelschenkel (81 bzw. 71) aufweisen,
wobei der Mittelschenkel (71) des Kopfteils (11) am Mittelschenkel (81) des Fussteils (12) anliegt, und/oder
wobei die Durchgangsöffnungen für die Bolzen (21, 22) des zumindest einen Klemmbügels (20) in den Mittelschenkeln (81, 71) angeordnet sind.

8. Tragkonstruktion nach einem der vorstehenden Ansprüche,
**dadurch gekennzeichnet,**
**dass** am Tragpfosten (1) eine Tragstrebe (3) und eine Stützstrebe (4) angeordnet sind, wobei die Tragstrebe (3) einerseits mit dem Kopfteil (11) und andererseits mit der Stützstrebe (4) verbunden ist, und
wobei die Stützstrebe (4) einerseits mit der Tragstrebe (3) und andererseits mit dem Kopfteil (11) verbunden ist.

9. Tragkonstruktion nach einem der vorstehenden Ansprüche,
**dadurch gekennzeichnet,**
**dass** der Verbindungssteg (23) mittels zumindest einer Sicherungseinrichtung (100, 101) am Kopfteil (11) formschlüssig festgelegt ist.
